# EUROPÄISCHE PATENTSCHRIFT

(11) **EP 1 516 537 B1**
(45) Veröffentlichungstag und Bekanntmachung des Hinweises auf die Patenterteilung: **19.10.2005**
(21) Anmeldenummer: 03021216.1
(22) Anmeldetag: 18.09.2003
(51) Int. Cl.: A23C 9/123

(54) **Pulver zum Ansatz für eine probiotische Joghurtspeise**
Powder for preparing probiotic yogurt foodstuff
Poudre pour préparation d'un aliment du type yaourt

(43) Veröffentlichungstag der Anmeldung: 23.03.2005
(73) Patentinhaber: PM-International AG, 1618 Luxembourg (LU)
(72) Erfinder: Schmitt, Gerhard, D-64625 Bensheim (DE)
(74) Vertreter: Zech, Stefan Markus

(56) Entgegenhaltungen:
- EP-A- 0 231 643
- EP-A- 1 269 857
- FR-A- 2 750 298
- US-A- 5 145 698
- DATABASE WPI Section Ch, Week 198418 Derwent Publications Ltd., London, GB; Class D11, AN 1984-111125 XP002263458 & JP 59 051747 A (KOBAYASHI K), 26. März 1984 (1984-03-26)

## Beschreibung

Die Erfindung betrifft ein Pulver zum Ansatz für eine probiotische Joghurtspeise enthaltend probiotische Kulturen mit einem vorbestimmten Anteil an lebenden probiotischen Milchsäurebakterien.

Probiotische Milchsäurebakterien, die Joghurtspeisen heute oftmals künstlich zugesetzt werden, können eine Reihe von positiven gesundheitlichen Wirkungen erzielen, wenn sie lebend bis in den Darm gelangen und sich dort für einen möglichst langen Zeitraum anheften. Sie hemmen dort die Besiedlung durch andere, z. T. gesundheitsschädliche Mikroorganismen und bauen eine gewünschte positive Intestinalflora auf. Die Wirksamkeit der probiotischen Kulturen wird also mit einem möglichst effektiven Antransport in den Darm und einer möglichst hohen Anheftungsrate an den Wänden des Darms bzw. im Intestinaltrakt erhöht.

FR 2 750 298 offenbart ein Pulver für düttestellung eines probiotischen Joghurts.

Die Aufgabe der vorliegenden Erfindung besteht damit darin, ein Pulver zum Ansatz für eine probiotische Joghurtspeise zu schaffen, bei dem die probiotischen Kulturen im Darm bzw. im Intestinaltrakt mit noch höherer Effektivität ihre Wirkung entfalten können.

Diese Aufgabe wird mit einem Pulver zum Ansatz für eine probiotische Joghurtspeise nach den Merkmalen des Patentanspruchs 1 gelöst. Vorteilhafte Weiterbildungen sind in den Unteransprüchen angegeben.

Ein Kerngedanke der vorliegenden Erfindung besteht darin, dass das Pulver zum Ansatz für eine probiotische Joghurtspeise ein thermogenetisch-lipolytisch-resorptionssteigerndes Agens, insbesondere Pfefferextrakt zur Verstärkung der resorptiven Prozesse im Darm sowie ein kapillardilatives Agens, insbesondere Nikotinsäure zur Erzielung einer Kapillardilatation im Intestinaltrakt enthält. Das im Piper Nigrum enthaltene Alkaloid Piperin als Pfefferextrakt zeigt einen thermogenen und lipolytischen und resorptionsverstärkenden Effekt. Das kapillardilative Agens, insbesondere Nikotinsäure bewirkt eine Kapillardilatation auch im Intestinaltrakt mit dadurch resorptionsfördernder Wirkung und verbesserter Sauerstoffaufnahme sowie Stoffwechselendproduktabgabe.

In der Kombination mit probiotischen Kulturen in einer Joghurtspeise hat sich überraschenderweise gezeigt, dass die gleichzeitige Beimengung des thermogenetisch-lipolytisch-resorptionssteigerndes Agens, insbesondere von Pfefferextrakt und des kapillardilatives Agens, insbesondere Nikotinsäure die Wirksamkeit der probiotischen Kulturen, insbesondere deren Aktivität und Adhäsion im Intestinalbereich in synergistischer Weise verstärkt.

Eine ausgewogene Wirkung der probiotischen Kulturen ergibt sich, wenn die probiotischen Kulturen mindestens zwei, vorzugsweise mindestens drei, besonders bevorzugt mindestens fünf verschiedene Kulturen (Keimstämme) umfassen. Die probiotischen Kulturen ergänzen sich dabei teilweise und können sich in gewissen Konstellationen auch gegenseitig unterstützen.

Die probiotischen Kulturen können als eine einzige Kultur oder in Kombination aus zwei oder mehr Kulturen aus der Gruppe umfassend Lactobacillus acidophilus, Lactobacillus bulgaricus, Lactobacillus delbrückii, Bifidobakterien, Streptococcus thermophilus ausgewählt sein. Mit diesen konkreten Kulturen haben sich gerade bei der Beimengung eines thermogenetisch-lipolytisch-resorptionssteigernden Agens, insbesondere Pfefferextrakt und eines kapillardilatives Agens, insbesondere Nikotinsäure gute Ergebnisse erzielen lassen.

Bevorzugtermaßen sind dem Pulver weiterhin Prebiotics, insbesondere Inulin und/oder Lactose zur Förderung der probiotischen Kulturen zugesetzt. Die Prebiotics dienen als Hilfs- und Nährstoffe für die probiotischen Kulturen und fördern deren Antransport in den Intestinaltrakt sowie deren Gedeihen und Aktivität im Intestinaltrakt.

In einer bevorzugten Ausgestaltung umfasst das Pulver weiterhin Molkeeiweiß insbesondere mit einem hohen Anteil von B-Vitaminen. B-Vitamine, insbesondere Vitamin B1, B2, B6 und B12 sind für zahlreiche Körperfunktionen lebensnotwendig; eine Unterversorgung führt zu Mangelerscheinungen.

In einer weiteren Ausgestaltung enthält das Pulver Calcium und/oder Phosphor, was unter anderem dem Knochenaufbau dient. Das Pulver kann in einer weiteren Ausgestaltung eine vorbestimmte Menge an Oligofructose enthalten, einerseits als Ballaststoff, zum anderen, um die probiotischen Kulturen möglichst gut durch das Säuremilieu des Magens zu schleusen.

In einer besonders bevorzugten Ausgestaltung umfasst das Pulver gemäß der vorliegenden Erfindung eine Anzahl an probiotischen Keimen bezogen auf die fertige Joghurtspeise von über 10 Mio./g, vorzugsweise von über 50 Mio./g, besonders bevorzugt von über 100 Mio/g.

Eine besonders zweckmäßige Konzentration des thermogenetisch-lipolytisch-resorptionssteigernden Agens, insbesondere des Pfefferextrakts liegt bezogen auf 100 ml fertige Joghurtspeise in einem Bereich von 0,1 mg bis 10 mg, vorzugsweise bei etwa 1,0 mg.

Eine besonders zweckmäßige Konzentration des kapillardilatives Agens, insbesondere der Nikotinsäure liegt bezogen auf 100 ml fertige Joghurtspeise in einem Bereich von 2 mg bis 20 mg, vorzugsweise bei etwa 10 mg. Der schwach saure Geschmack führt zu keiner unangenehmen Geschmacksveränderung der mit dem erfindungsgemäßen Pulver herstellbaren Joghurtspeise.

In einer besonders bevorzugten Ausgestaltung ist das Pulver zum Ansatz einer probiotischen Joghurtspeise in einem Licht- und Sauerstoffdurchtritt hemmenden Folienbeutel untergebracht. Hierdurch wird eine lange Haltbarkeit, insbesondere die Aufrechterhaltung hoher Aktivität der gefriergetrockneten probiotischen Kulturen sichergestellt.

Erfindungsgemäß wird weiterhin auch eine probiotische Joghurtspeise beansprucht, die aus einem Ansatz aus dem Pulver nach einem der Ansprüche 1 bis 11 sowie Milch, insbesondere homogenisierte H-Milch nach einer Generierungszeit von einigen Stunden hergestellt wird. Hierzu kann ein besonderes Bereitungssystem eingesetzt werden, das auf das erfindungsgemäße Pulver abgestimmt ist. Dieses Bereitungssystem besteht aus einem Innentopf, in dem das Pulver vorzugsweise mit H-Milch in einer bestimmten Menge, vorzugsweise einem Liter, angerührt wird. In den Außentopf wird kochendes Wasser in einer vorbestimmten Menge gefüllt. Der den Ansatz enthaltende Innentopf wird durch den mit kochendem Wasser befüllten Außentopf erwärmt, wobei durch den Wärmegradienten im Innentopf ein Konvektionseffekt entsteht, der verhindert, dass die temperaturempfindlichen probiotischen Kulturen in den heißen Randbereichen des Innentopfes Schaden nehmen. Durch den Konvektionseffekt erhalten alle Keime bei der vorzugsweise acht bis 10 Stunden betragenden Generierungszeit ihr Temperaturoptimum. Das fertige Joghurt ist über mindestens eine Woche im Kühlschrank haltbar bei Aufrechterhaltung einer hohen Keimzahl.

Die gesundheitlichen Wirkeffekte der probiotischen Kulturen werden durch den thermogenen und lipolytischen und resorptionsverstärkenden Effekt des thermogenetisch-lipolytisch-resorptionssteigernden Agens, insbesondere Pfefferextrakt sowie dem gefäßdilativen Effekt mit Stoffwechselaktivierung des kapillardilatives Agens, insbesondere der Nikotinsäure in überraschender Weise noch entscheidend verstärkt.

## Patentansprüche

1. Pulver zum Ansatz für eine probiotische Joghurtspeise enthaltend:
- probiotische Kulturen mit einem vorbestimmten Anteil an lebenden probiotischen Milchsäurebakterien,
- ein thermogenetisch-lipolytisch-resorptionssteigerndes Agens, insbesondere Pfefferextrakt zur Verstärkung der resorptiven Prozesse im Darm sowie ein kapillardilatives Agens, insbesondere Nikotinsäure, zur Erzielung einer Kapillardilatation im Intestinaltrakt.

2. Pulver nach Anspruch 1,
**dadurch gekennzeichnet,**
**dass** die probiotischen Kulturen zumindest zwei, vorzugsweise mindestens drei, besonders bevorzugt mindestens fünf verschiedene Kulturen (Keimstämme) umfassen.

3. Pulver nach Anspruch 1 oder 2,
**dadurch gekennzeichnet,**
**dass** die probiotischen Kulturen als einzige Kultur oder kombiniert zu zwei oder mehr Kulturen aus der Gruppe umfassend Lactobacillus acidophilus, Lactobacillus bulgaricus, Lactobacillus delbrückii, Bifidobakterien, Streptococcus thermophilus ausgewählt sind.

4. Pulver nach einem der Ansprüche 1 bis 3,
**dadurch gekennzeichnet,**
**dass** weiterhin Prebiotics, insbesondere Inulin und/oder Lactose zur Förderung der probiotischen Kulturen enthalten sind.

5. Pulver nach einem der Ansprüche 1 bis 4,
**dadurch gekennzeichnet,**
**dass** weiterhin Molkeeiweiß, insbesondere mit einem hohen Anteil an B-Vitaminen enthalten ist.

6. Pulver nach einem der Ansprüche 1 bis 5,
**dadurch gekennzeichnet,**
**dass** weiterhin Calcium und/oder Phosphor enthalten ist.

7. Pulver nach einem der Ansprüche 1 bis 6,
**dadurch gekennzeichnet,**
**dass** weiterhin Oligofructose enthalten ist.

8. Pulver nach einem der Ansprüche 1 bis 7,
**dadurch gekennzeichnet,**
**dass** die Anzahl der probiotischen Keime bezogen auf die fertige Joghurtspeise mindestens 10 Mio./g Joghurtspeise, vorzugsweise mindestens 50 Mio./g Joghurtspeise, besonders bevorzugt mindestens 100 Mio/g Joghurtspeise betragen.

9. Pulver nach einem der Ansprüche 1 bis 8,
**dadurch gekennzeichnet,**
**dass** bezogen auf 100 ml fertige Joghurtspeise das thermogenetisch-lipolytisch-resorptionssteigernde Agens, insbesondere der Pfefferextrakt in einer Konzentration von 0,1 mg bis 10 mg, vorzugsweise in einer Konzentration in etwa von 1,0 mg enthalten ist.

10. Pulver nach einem der Ansprüche 1 bis 9,
**dadurch gekennzeichnet,**
**dass** bezogen auf 100 ml fertige Joghurtspeise das kapillardilative Agens, insbesondere die Nikotinsäure in einer Konzentration von 2 mg bis 20 mg, vorzugsweise von etwa 10 mg enthalten ist.

11. Pulver nach einem der Ansprüche 1 bis 10,
**dadurch gekennzeichnet,**
**dass** das Pulver in einem Licht- und Sauerstoffdurchtritt hemmenden Folienbeutel untergebracht ist.

12. Probiotische Joghurtspeise, die aus einem Ansatz aus dem Pulver nach einem der Ansprüche 1 bis 11 sowie aus Milch, insbesondere homogenisierter Milch nach einer Generierungszeit von einigen Stunden hergestellt ist.

## Claims

1. Powder for the preparation for a probiotic yoghurt food containing:
- probiotic cultures having a predetermined proportion of living probiotic lactic acid bacteria,
- a thermogenetic-lipolytic-resorption-increasing agent, in particular pepper extract to intensify the resorptive processes in the intestine and a capillary-dilating agent, in particular nicotinic acid, to achieve capillary dilation in the intestinal tract.

2. Powder according to claim 1, **characterised in that** the probiotic cultures comprise at least two, preferably at least three, particularly preferably at least five different cultures (bacterial strains).

3. Powder according to claim 1 or 2, **characterised in that** the probiotic cultures as a single culture or combined to form two or more cultures are selected from the group comprising lactobacillus acidophilus, lactobacillus bulgaricus, lactobacillus delbrückii, bifidus bacteria, streptococcus thermophilus.

4. Powder according to one of claims 1 to 3, **characterised in that** prebiotics, in particular inulin and/or lactose, are also present to promote the probiotic cultures.

5. Powder according to one of claims 1 to 4, **characterised in that** whey protein, in particular having a high proportion of B vitamins, is also present.

6. Powder according to one of claims 1 to 5, **characterised in that** calcium and/or phosphorus is also present.

7. Powder according to one of claims 1 to 6, **characterised in that** oligofructose is also present.

8. Powder according to one of claims 1 to 7, **characterised in that** the number of probiotic bacteria, based on the final yoghurt food, is at least 10 million/g of yoghurt food, preferably at least 50 million/g of yoghurt food, particularly preferably at least 100 million/g of yoghurt food.

9. Powder according to one of claims 1 to 8, **characterised in that**, based on 100 ml of final yoghurt food, the thermogenetic-lipolytic-resorption-increasing agent, in particular the pepper extract, is present in a concentration of 0.1 mg to 10 mg, preferably in a concentration approximately of 1.0 mg.

10. Powder according to one of claims 1 to 9, **characterised in that**, based on 100 ml of final yoghurt food, the capillary-dilating agent, in particular the nicotinic acid, is present in a concentration of 2 mg to 20 mg, preferably of about 10 mg.

11. Powder according to one of claims 1 to 10, **characterised in that** the powder is accommodated in a foil bag which inhibits the passage of light and oxygen.

12. Probiotic yoghurt food which is produced from a preparation of the powder according to one of claims 1 to 11 and from milk, in particular homogenised milk after a generating time of a few hours.

## Revendications

1. Poudre pour la préparation d'un aliment de type yaourt contenant:
- des cultures probiotiques avec une proportion prédéterminée de bactéries d'acide lactique probiotique vivantes,
- un agent augmentant la résorption de façon lipolytique et thermogénique, notamment un extrait de poivre pour renforcer les processus de résorption dans l'intestin, ainsi qu'un agent dilatant les capillaires, notamment l'acide nicotinique pour parvenir à une dilatation capillaire dans le tractus intestinal.

2. Poudre selon la revendication 1, **caractérisée en ce que** les cultures probiotiques comprennent au moins deux, de préférence au moins trois, de manière particulièrement préférée au moins cinq cultures différentes (souches de germe).

3. Poudre selon la revendication 1 ou 2, **caractérisée en ce que** les cultures probiotiques sont sélectionnées sous la forme de culture unique ou combinée à deux ou plusieurs cultures provenant du groupe comprenant le Lactobacillus acidophilus, le Lactobacillus bulgaricus, le Lactobacillus delbrückii, les bifidobactéries, le Streptococcus thermophilus.

4. Poudre selon l'une quelconque des revendications 1 à 3, **caractérisée en ce que** par ailleurs les prébiotiques, notamment l'inuline et/ou le lactose sont contenus pour favoriser les cultures probiotiques.

5. Poudre selon l'une quelconque des revendications 1 à 4, **caractérisée en ce que** par ailleurs la lactalbumine présentant notamment une proportion élevée en vitamines B est contenue.

6. Poudre selon l'une quelconque des revendications 1 à 5, **caractérisée en ce qu'**elle contient en outre du calcium et/ou du phosphore.

7. Poudre selon l'une quelconque des revendications 1 à 6, **caractérisée en ce qu'**elle contient en outre des oligofructoses.

8. Poudre selon l'une quelconque des revendications 1 à 7, **caractérisée en ce que** le nombre de germes probiotiques rapportés à l'aliment de type yaourt fini comprend au moins 10 millions/g d'aliment de type yaourt, de préférence au moins 50 millions/g d'aliment de type yaourt, de manière particulièrement préférée au moins 100 millions/g d'aliment de type yaourt.

9. Poudre selon l'une quelconque des revendications 1 à 8, **caractérisée en ce que** rapporté à 100 ml d'aliment de type yaourt fini, l'agent augmentant la résorption de façon lipolytique et thermogénique, notamment l'extrait de fer est contenu en une concentration de 0,1 mg à 10 mg, de préférence en une concentration d'environ 1,0 mg.

10. Poudre selon l'une quelconque des revendications 1 à 9, **caractérisée en ce que**, rapporté à 100 ml d'aliment de type yaourt fini, l'agent dilatant les capillaires, notamment l'acide nicotinique, est contenu en une concentration de 2 mg à 20 g, de préférence d'environ 10 mg.

11. Poudre selon l'une quelconque des revendications 1 à 10, **caractérisée en ce que** la poudre est placée dans un récipient en plastique hermétique à l'oxygène et à la lumière.

12. Aliment de type yaourt probiotique qui est préparé à partir d'une préparation de poudre selon l'une quelconque des revendications 1 à 11, ainsi que de lait, notamment de lait ultrapasteurisé après un temps de régénération de quelques heures.
